# EUROPEAN PATENT APPLICATION

(11) **EP 1 445 965 A2**
(43) Date of publication of application: **11.08.2004**
(21) Application number: 04250629.5
(22) Date of filing: 05.02.2004
(51) Int. Cl.: H04N 13/00

(54) **Display apparatus and display method**

(30) Priority: 05.02.2003 JP 2003027976
(71) Applicant: Pioneer Corporation, Tokyo-to (JP)
(72) Inventor: Tomisawa, Isao Pioneer Corporation, Tsurugashima-shi Saitama-ken (JP)
(74) Representative: Townsend, Victoria Jayne

(57) **Abstract**

A display apparatus (1) is provided with a plurality of display devices (11, 12) disposed on a line of sight of an observer in front and rear relation to one another for superposing and displaying a plurality of images on an object to be displayed; an intensity adjustment device (1 4 1) for adjusting intensity of light emitted by at least one display device of the display devices so that the intensity difference between the light having maximum intensity (C1) in the observer position and the light having minimum intensity (c2) in the observation position respectively emitted by the devices may fall within a first predetermined range; and a chromaticity adjustment device (1 4 2) for adjusting chromaticity emitted by the one display device so that chromaticity coordinates in the position of the light emitted by the respective arbitrarily selected two display devices of the display devices respectively emitted by the display devices distribute within a second predetermined range.

## Description

### BACKGROUND OF THE INVENTION

### 1.Field of the Invention

The present invention belongs to a technical field of a display apparatus having a plurality of display devices disposed in front and rear relation to one another in a direction of a line of sight of an observer, and a display method for enabling stereoscopic vision by controlling images displayed on the respective display devices.

### 2. Description of a Related Art

Conventionally, display apparatuses in various forms have been proposed as apparatuses capable of displaying stereoscopic images, and put into practical use. For example, a liquid crystal shutter spectacle system and the like are well known as a display apparatus electrically rewritable and capable of displaying stereoscopic images. This liquid crystal shutter spectacle system performs imaging on the object from different directions with a camera, combines image data including obtained parallax information into one image signal, and inputs it in the display apparatus to display it thereon. The observer wears a liquid crystal shutter spectacles, and, for example, the liquid crystal shutter for the right eye is made in a transmissive state at the time of an odd number field, and the liquid crystal shutter for the left eye is in a light blocking state. On the other hand, the liquid crystal shutter for the left eye is in a transmissive state at the time of an even number field, and the liquid crystal shutter for the right eye is in a light blocking state. At this time, by displaying an image for the right eye in the odd number field and an image for the left eye in the even number field in synchronization with each other, the observer visually sees a stereoscopic image by watching the images including parallax for the right eye and the left eye with the respective eyes.

In addition, there is a display apparatus in which a plurality of display units are disposed on the line of sight of the observer in front and rear relation to one another, and, by superposing and watching images displayed on them, the images are visually seen as a stereoscopic image despite that the images are discrete in a depth direction. Further, there is a display apparatus improved so that the object is visually seen as if the object were located in a middle position of discrete positions and the more stereoscopic image can be displayed by making changes to the intensity of the images respectively displayed on the plurality of display units in order to improve its discrete state. For example, a display apparatus of intensity modulation type that enables display in which a translucent object or an object behind can be seen through by superposing and displaying the object images from the plurality of display units using a plurality of half mirrors is proposed (For example, see Japanese Patent Application Laid-Open No. 2000-115812).

However, in the display apparatus having these plurality of display units disposed on the line of sight of the observer in front and rear relation to one another, if there are variations in color (i.e., chromaticity) or brightness (i.e., intensity) of the display units disposed in front and rear relation to one another, the observer has an uncomfortable feeling about the images displayed on the display units. That is, there is a technical inconvenience that it is difficult or impossible for the observer to visually see the stereoscopic image suitably. Especially, the display apparatus of intensity modulation type has a technical inconvenience that it is difficult or impossible for the observer to visually see the stereoscopic image unless the images displayed in front and rear relation to one another are displayed with suitable intensity or chromaticity. Specifically, even when the average of intensity or chromaticity is generally the same as the entire screen, if two screens having different distribution of intensity and chromaticity within the screens with each other are superposed, the difference of intensity or chromaticity becomes obvious as nearer to the periphery or the center, for example. In the display apparatus performing stereoscopic display of intensity modulation system, there is another inconvenience that aberration occurs in the intended stereoscopic display depending on the largeness of the difference of intensity or difference of chromaticity.

The invention is achieved in light of the above described inconveniences, for example, and objected to provide a display apparatus and a display method for enabling more preferable stereoscopic display, for example.

### SUMMARY OF THE INVENTION

The above object of the present invention can be achieved by a display unit of the present invention. The display unit is provided with a plurality of display devices disposed on a line of sight of an observer in front and rear relation to one another for superposing and displaying a plurality of images on an object to be displayed on the line of sight; an intensity adjustment device for adjusting intensity of light emitted by at least one display device of the plurality of display devices so that the intensity difference between the light having maximum intensity in an observation position of the observer and the light having minimum intensity in the observation position of light respectively emitted by the plurality of devices may fall within a first predetermined range; and a chromaticity adjustment device for adjusting chromaticity of light emitted by the one display device so that chromaticity coordinates in the observation position of the light emitted by the respective arbitrarily selected two display devices of the plurality of display devices of the light respectively emitted by the plurality of display devices distribute within a second predetermined range.

According to the present invention, the observer can visually see the plurality of images with no variation in intensity and chromaticity by superposing them on the line of sight. By displaying images for stereoscopic display on this display apparatus (i.e., the display apparatus in which intensity adjustment and chromaticity adjustment are performed), the observer can visually see, for example, the suitable images for stereoscopic display in a suitable state (i.e., with no variation in intensity or chromaticity produced) as the respective plurality of display devices essentially should display. That is, the stereoscopic image is visually seen more suitably.

Such conditions have large advantages in the display apparatus capable of displaying the stereoscopic image by superposing and displaying the plurality of images that have been suitably intensity modulated on the line of sight of the observer. That is, by displaying the plurality of images that have been suitably intensity modulated on the display apparatus according to the invention, the observer can visually see the stereoscopic image more suitably.

The intensity and chromaticity of the light emitted by the plurality of display devices are adjusted within the suitable range, and consequently, the observer can visually see the stereoscopic image suitably.

The above object of the present invention can be achieved by a display unit of the present invention. The display unit is provided with a plurality of display devices disposed on a line of sight of an observer in front and rear relation to one another for superposing and displaying a plurality of images on an object to be displayed on the line of sight; an intensity adjustment device for adjusting intensity of light emitted by at least one display device of two adjacent display devices of the plurality of display devices so that the intensity difference between the light having maximum intensity in an observation position of the observer and the light having minimum intensity in the observation position of light respectively emitted by the adjacent two devices may fall within a first predetermined range; and a chromaticity adjustment device for adjusting chromaticity of light emitted by the one display device so that chromaticity coordinates in the observation position of the light respectively emitted by the adjacent two display devices distribute within a second predetermined range.

According to the present invention, the intensity and chromaticity of the light emitted by the plurality of display devices are adjusted within the suitable range, and consequently, the observer can visually see the stereoscopic image suitably.

In one aspect of the present invention can be achieved by the display unit of the present invention. The display unit is wherein assuming that the maximum intensity is C1 and the minimum intensity is C2, the intensity difference is expressed by (C1 - C2)/(C1 + C2), and the first predetermined range is equal to or less than 0.15.

According to the present invention, in the display apparatus that satisfies the condition, the observer can visually see the stereoscopic image suitably almost or completely regardless of the existence of the variation in intensity.

In another aspect of the present invention can be achieved by the display unit of the present invention. The display unit is wherein the first predetermined range is less than 0.075.

According to the present invention, when image signals on images having the same intensity and the same color are supplied to the plurality of display devices, respectively, the observer never recognizes the intensity difference of the images displayed on the respective display devices. Accordingly, by displaying images for stereoscopic display on such display devices, the observer can visually see the image with stereoscopic effect more suitably.

Therefore, there is a large advantage, in the display apparatus of intensity modulation type, for example, the suitably intensity modulated image can be visually seen by the observer suitably while keeping the condition of the modulation.

In further aspect of the present invention can be achieved by the display unit of the present invention. The display unit is wherein the chromaticity coordinates are chromaticity coordinates indicated by the XYZ color system, and the second predetermined range is a range in which the difference between x coordinates and the difference between y coordinates of the chromaticity coordinates are equal to or less than 0.06, respectively.

According to the present invention, the observer can visually see the stereoscopic image suitably almost or completely regardless of the existence of the variation in chromaticity.

In further aspect of the present invention can be achieved by the display unit of the present invention. The display unit is wherein the second predetermined range is a range in which the difference between x coordinates and the difference between y coordinates of the chromaticity coordinates are equal to or less than 0.03, respectively.

According to the present invention, when image signals on images having the same intensity and the same color are supplied to the plurality of display devices, respectively, the observer never recognizes the intensity difference of the images displayed on the respective display devices. Accordingly, by displaying images for stereoscopic display on such display devices, the observer can visually see the image with stereoscopic effect more suitably.

In further aspect of the present invention can be achieved by the display unit of the present invention. The display unit is wherein the plurality of display devices can perform display in R, G, and B colors, and at least one of the intensity adjustment device and the chromaticity adjustment device performs adjustment on the light with respect to the R, G, and B colors.

According to the present invention, the image constituted by the light within the above described range of intensity or chromaticity can be visually seen with respect to the light in R, G and B colors, i.e., red light (R), blue light (B), and green light (G). Accordingly, in the display apparatus of intensity modulation type, for example, in the image on the color display, the stereoscopic image can be visually seen more suitably.

In further aspect of the present invention can be achieved by the display unit of the present invention. The display unit is wherein at least one of the intensity adjustment device and the chromaticity adjustment device performs adjustment on white light emitted by the one display device.

According to the present invention, the adjustment can be also performed on the white light so as to satisfy the conditions on the above described range of intensity or chromaticity.

In further aspect of the present invention can be achieved by the display unit of the present invention. The display unit is wherein the intensity adjustment device further coordinates gamma characteristics of the plurality of display devices.

According to the present invention, by coordinating the gamma characteristics, with respect to the image signals supplied to the respective display devices, for example, it becomes unnecessary for the intensity adjustment device, for example, to adjust the intensity by considering the variations in gamma characteristics of the respective display devices. That is, the apparatus has a large advantage that the load of processing required for the intensity adjustment can be reduced.

In further aspect of the present invention can be achieved by the display unit of the present invention. The display unit is wherein at least one of the intensity adjustment device and the chromaticity adjustment device performs adjustment on the light emitted by respective screen piece units as units into which the one display device is divided within its screen.

According to the present invention, even if the intensity or chromaticity is suitably adjusted with respect to the screen piece units, the same effect as that in the display apparatus according to the embodiment can be obtained. That is, the stereoscopic image can be visually seen suitably.

In further aspect of the present invention can be achieved by the display unit of the present invention. The display unit is wherein the screen piece unit is a pixel block or a pixel line constituted by one pixel or a group of a plurality of pixels in the one display device.

According to the present invention, by disposing the plurality of display devices by superposing the parts having display characteristics relatively and slightly different with respect to the pixel blocks or pixel lines, or coordinating the tendency of the variations in display characteristics (that is, adjusting intensity or chromaticity so as to coordinate the tendency of variations), for example, the adverse effects on the stereoscopic display by the variations within the screen in display characteristics are reduced in the respective pixel blocks and the respective pixel lines, thereby, also as a whole, the suitably stereoscopic display can be easily performed. According to the aspect, the construction in which the adverse effects on the stereoscopic display by the variations within the screen in display characteristics are reduced in the respective pixel blocks and the respective pixel lines can be adopted. Thereby, the margin with respect to the variations in display characteristics becomes broader, and the rate of apparatuses that can be treated as good products in relation to the variations in display characteristics can be increased, and that leads to improvements in manufacturing yield and reduction of manufacturing cost.

In further aspect of the present invention can be achieved by the display unit of the present invention. The display unit is wherein at least ones of gradients of intensity change and gradients of chromaticity within the respective screens of the plurality of display devices are equal to each other.

According to the present invention, each display device has intensity characteristics or chromaticity characteristics within the allowable range as a single body, and two screens having tendencies equal to each other are superposed, thereby, suitable stereoscopic display over the entire screen can be performed.

In further aspect of the present invention can be achieved by the display unit of the present invention. The display unit is wherein the intensity adjustment device adjusts the intensity of the light so that intensity irregularities of the one display device and intensity irregularities of another display device of the plurality of display devices may have the same tendency to each other.

According to the present invention, the margin of the variations in display characteristics becomes broader, and the rate of apparatuses that can be treated as good products in relation to the variations in display characteristics can be increased, and that leads to improvements in manufacturing yield and reduction of manufacturing cost.

In further aspect of the present invention can be achieved by the display unit of the present invention. The display unit is wherein the chromaticity adjustment device adjusts the chromaticity of the light so that color irregularities of the one display device and color irregularities of another display device of the plurality of display devices may have the same tendency to each other.

According to the present invention, the margin of the variations in display characteristics becomes broader, and the rate of apparatuses that can be treated as good products in relation to variations in display characteristics can be increased, and that leads to improvements in manufacturing yield and reduction of manufacturing cost.

In further aspect of the present invention can be achieved by the display unit of the present invention. The display unit is wherein at least one of the intensity adjustment device and the chromaticity adjustment device performs adjustment by rewriting image information on at least one of intensity and chromaticity that the one display device has.

According to the present invention, by sending the instruction with the input device by the observer, for example, the intensity or chromaticity adjustment in response to the visual characteristics of the observer can be performed.

In further aspect of the present invention can be achieved by the display unit of the present invention. The display unit is further comprising an input device that can input an instruction for adjusting at least one of intensity and chromaticity of the light,wherein at least one of the intensity adjustment device and the chromaticity adjustment device performs adjustment according to the instruction.

According to the present invention, the input device includes various input devices such as a pointing device such as a mouse, a controller, a cross key, buttons, and a voice input device. Further, the input is performed by a touch panel disposed on the front of the display apparatus. Alternatively, the apparatus may have a construction in which an instruction is input automatically by a microcomputer.

In further aspect of the present invention can be achieved by the display unit of the present invention. The display unit is wherein at least display devices other than a display device disposed most rearward seen from the observer of the plurality of display devices are constituted by a translucent display device.

According to the present invention, the image displayed on the display device disposed at the rear as seen from the side of the observer can be visually seen through the display device disposed at the front as seen from the side of the observer, and the display device can be disposed directly on the line of sight of the observer.

In further aspect of the present invention can be achieved by the display unit of the present invention. The display unit is wherein the translucent display device is a liquid crystal display device or an electroluminescence display device.

According to the present invention, the stereoscopic image can be displayed by using the translucent display device in the form of a panel such as a liquid crystal display device or an electroluminescence display device.

In further aspect of the present invention can be achieved by the display unit of the present invention. The display unit is wherein the plurality of display devices include a display device constituted by a half mirror.

According to the present invention, the display device is not disposed directly on the line of sight of the observer, and the image is combined via the half mirror. Therefore, a device having no light transparency can be used as the display device. A cathode ray tube device, a plasma display device and so on can be utilized.

The above object of the present invention can be achieved by a display method of the present invention. The display method relating a display apparatus including a plurality of display devices disposed on a line of sight of an observer in front and rear relation to one another for superposing and displaying a plurality of images on an object to be displayed on the line of sight, the method is provided with a display process of displaying the plurality of images on the plurality of display devices; an intensity adjustment process of adjusting intensity of light emitted by at least one display device of the plurality of display devices so that the intensity difference between the light having maximum intensity in an observation position of the observer and the light having minimum intensity in the observation position of light respectively emitted by the plurality of devices may fall within a first predetermined range; and a chromaticity adjustment process of adjusting chromaticity of light emitted by the one display device so that chromaticity coordinates in the observation position of the light emitted by the respective arbitrarily selected two display devices of the plurality of display devices of the light respectively emitted by the plurality of display devices may distribute within a second predetermined range.

According to the present invention, the observer is allowed to visually see the plurality of images having no variation in intensity and chromaticity on the line of sight by superposing them. That is, by displaying the images for stereoscopic display in the display process, the observer can visually see, for example, the suitable images for stereoscopic display in a suitable state (i.e., with no variation in intensity or chromaticity produced) as the plurality of display devices should display essentially. That is, the stereoscopic image is visually seen more suitably.

The above object of the present invention can be achieved by a display method of the present invention. The display method relating a display apparatus including a plurality of display devices disposed on a line of sight of an observer in front and rear relation to one another for superposing and displaying a plurality of images on an object to be displayed on the line of sight, the method is provided with: a display process of displaying the plurality of images on the plurality of display devices; an intensity adjustment process of adjusting intensity of light emitted by at least one display device of two adjacent display devices of the plurality of display devices so that the intensity difference between the light having maximum intensity in an observation position of the observer and the light having minimum intensity in the observation position of light respectively emitted by the adjacent two devices may fall within a first predetermined range; and a chromaticity adjustment process of adjusting chromaticity of light emitted by the one display device so that chromaticity coordinates in the observation position of the light respectively emitted by the adjacent two display devices may distribute within a second predetermined range.

According to the present invention, the observer is allowed to visually see the plurality of images having no variation in intensity and chromaticity on the line of sight by superposing them.

### BRIEF DESCRIPTION OF THE DRAWINGS

FIG. 1 is a block diagram of an example according to a display apparatus of the invention.
FIG. 2 is a schematic sectional view of an optical system showing another construction of a display unit of the example according to the display apparatus of the invention.
FIG. 3 is a schematic diagram showing a principle of operation of the example according to the display apparatus of the invention.
FIG. 4 is a diagram schematically showing intensity irregularities of a front screen of the example according to the display apparatus of the invention.
FIG. 5 is a diagram schematically showing chromaticity irregularities of the front screen of the example according to the display apparatus of the invention.
FIG. 6 is a diagram schematically showing screen areas formed by respectively dividing the front screen and the rear screen of the example according to the display apparatus of the invention.
FIG. 7 is a schematic sectional view schematically showing a specific example of intensity or chromaticity adjustment of the example according to the display apparatus of the invention.
FIG. 8 is a diagram schematically showing a display apparatus having three screens in the example according to the display apparatus of the invention.

### DESCRIPTION OF THE PREFERRED EMBODIMENTS

The operation and benefit of the invention will be made clear from embodiments described as below.

The embodiments of the invention will be described hereinafter.

In an aspect of a first embodiment according to the display apparatus of the invention, the display apparatus includes: a plurality of display devices disposed on a line of sight of an observer in front and rear relation to one another for superposing and displaying a plurality of images on an object to be displayed on the line of sight; an intensity adjustment device for adjusting intensity of light emitted by at least one display device of the plurality of display devices so that the intensity difference between the light having maximum intensity in an observation position of the observer and the light having minimum intensity in the observation position of light respectively emitted by the plurality of devices may fall within a first predetermined range; and a chromaticity adjustment device for adjusting chromaticity of light emitted by the one display device so that chromaticity coordinates in the observation position of the light emitted by the respective arbitrarily selected two display devices of the plurality of display devices of the light respectively emitted by the plurality of display devices may distribute within a second predetermined range.

According to the first embodiment of the display device of the invention, at the time of its operation, by superposing and displaying images for stereoscopic display as seen from the side of the observer with the plurality of display devices disposed on the line of sight of the observer in front and rear relation to one another, the stereoscopic display or three-dimensional display can be performed. That is, the observer can visually see the stereoscopic image. Here, "superposing and displaying images on the line of sight of the observer" according to the invention indicates uniform superposition in a literal sense, and additionally, the degree of superposition enough to be displayed so that the observer may visually see the stereoscopic image. In addition, "the plurality of images on the object to be displayed" according to the invention is not limited to the plurality of images on the same object to be displayed, but also includes the plurality of images on different objects to be displayed, such as, in the display apparatus in a car navigation system, for example, road images displayed by being superposed and an arrow image indicating traveling direction etc.

For example, in stereoscopic display of intensity modulation type, by allocating intensity with respect to the same image part displayed by two display devices, continuous stereoscopic display in which an image is seen as if it exists in some position in a depth direction between the two display devices can be performed. Alternatively, discrete stereoscopic display in which parts of an image are displayed in either of the two display devices can be performed. Further, continuous or discrete stereoscopic display in which an image is seen as if it exists in some position between three or more display devices can be performed.

Here, for example, when the same image signal is supplied to the respective plurality of display devices and displayed and output, the same image is displayed on the plurality of display devices. Therefore, the observer essentially should have visually see these images as images having the same intensity and chromaticity. However, the plurality of images that the observer visually see, which should have been the same, include images with variations in intensity or chromaticity due to variations in display characteristics between the plurality of display devices, variations in display characteristics caused by the variations in display characteristics within screens in the separate display devices and increased when the plurality of display devices are superposed, difference in distances between the observer and the respective plurality of display devices or in propagation paths between them. Such variations in intensity or chromaticity become a large inconvenience, for example, as the intensity modulation system, in the display apparatus for superposing and displaying the plurality of images in a condition with suitable intensity.

In the embodiment, in order to resolve such variations in intensity or chromaticity, the intensity adjustment device including a microcomputer, etc., for example, adjusts intensity of the light emitted by the respective display devices and the chromaticity adjustment device including a microcomputer, etc., for example, adjusts chromaticity of the light emitted by the respective display devices.

When the same image signal is input in the respective plurality of display devices, for example, the intensity adjustment device can adjust intensity of light of at least one of the plurality of display devices so that the intensity of the light emitted by the respective display devices in the position of the observer (i.e., observation position) may be intensity within the first predetermined range. Note that, here, "the light emitted by the plurality of display devices" may be the light emitted by the respective display devices when the same still image signal or moving image signal is supplied to the plurality of display devices. If the supplied image signal is a still image signal, for example, the intensity difference or the chromaticity coordinates may be determined by comparing the light emitted respectively by the same image parts or corresponding pixels of the plurality of display devices based on the still image signal. Alternatively, if the supplied image signal is a still image signal, the intensity difference or the chromaticity coordinates may be determined by comparing the light emitted respectively by the same image parts or corresponding pixels at the same time based on the still image signal of the plurality of display devices.

That is, the intensity of the light emitted by at least one display device of the plurality of display devices is adjusted so that the intensity difference between the light that the observer feels brightest (i.e., the light having maximum intensity) and the light that the observer feels darkest (i.e., the light having minimum intensity) may fall within the first predetermined range. For example, when the front screen is darker than the rear screen, the former is adjusted to be brighter, and, contrary, when the rear screen is darker, this is adjusted to be brighter. On the other hand, when the front screen is brighter than the rear screen, the former is adjusted to be darker, and, when the rear screen is brighter, this is adjusted to be darker. Thus, the variations in intensity that can be produced by the variations in display characteristics in the separate display devices, the difference of propagation paths of light between the observer and the plurality of display devices, etc. can be reduced or eliminated.

Further, when the same image signal is input to the respective plurality of display devices, for example, the chromaticity adjustment device can adjust chromaticity of the light emitted by the respective plurality of display devices. That is, the device can adjust chromaticity of the light emitted by at least one of the plurality of display devices so that the variations in color that the observer visually see in the observation position may be reduced (specifically, the respective chromaticity coordinates of the light emitted by the arbitrarily selected two display devices may distribute within the second predetermined range).

That is, the chromaticity of the light emitted by at least one display device of the plurality of display devices is adjusted so that the observer may visually see the light emitted by the plurality of display devices as the same color or substantially the same color, respectively.

Thereby, the observer can visually see the plurality of images with no variation in intensity and chromaticity by superposing them on the line of sight. By displaying images for stereoscopic display on this display apparatus (i.e., the display apparatus in which intensity adjustment and chromaticity adjustment are performed), the observer can visually see, for example, the suitable images for stereoscopic display in a suitable state (i.e., with no variation in intensity or chromaticity produced) as the respective plurality of display devices essentially should display. That is, the stereoscopic image will be visually seen more suitably.

Such conditions have large advantages in the display apparatus capable of displaying the stereoscopic image by superposing and displaying the plurality of images that have been suitably intensity modulated on the line of sight of the observer. That is, by displaying the plurality of images that have been suitably intensity modulated on the display apparatus according to the invention, the observer can visually see the stereoscopic image more suitably.

As a result, according to the display apparatus of the embodiment, the intensity and chromaticity of the light emitted by the plurality of display devices are adjusted within the suitable range, and consequently, the observer can visually see the stereoscopic image suitably.

Incidentally, the intensity and chromaticity adjustment as described above may be performed also on the image signal supplied to the display devices. Alternatively, in the display apparatus including an input device, the adjustment may be performed according to the instruction of the observer in each case.

Further, the above described intensity and chromaticity adjustment may be performed by displaying the images for adjustment etc. (for example, images with the same intensity and the same chromaticity) on the plurality of display devices, respectively, and adjusting the intensity or chromaticity of the light emitted from those respective images. These adjustments may be performed at the time of manufacturing the display apparatus according to the embodiment (or at the time of the factory shipment), or may be performed by the observer with the input device afterwards.

Alternatively, the apparatus may include a recording device such as a RAM, for example, that can record the result of the intensity or chromaticity adjustment. Thereby, at the time of the factory shipment, for example, the status of the display apparatus in which the intensity or chromaticity has been suitably adjusted can be recorded.

Further, in the embodiment, even if an arbitrary stereoscopic system or three-dimensional display system other than the intensity modulation system can be adopted as the stereoscopic system or three-dimensional display system, the effects as described above can be obtained.

A second embodiment according to the display apparatus of the invention is a display apparatus includes: a plurality of display devices disposed on a line of sight of an observer in front and rear relation to one another for superposing and displaying a plurality of images on an object to be displayed on the line of sight; an intensity adjustment device for adjusting intensity of light emitted by at least one display device of two adjacent display devices of the plurality of display devices so that the intensity difference between the light having maximum intensity in an observation position of the observer and the light having minimum intensity in the observation position of light respectively emitted by the adjacent two devices may fall within a first predetermined range; and a chromaticity adjustment device for adjusting chromaticity of light emitted by the one display device so that chromaticity coordinates in the observation position of the light respectively emitted by the adjacent two display devices may distribute within a second predetermined range.

In the second embodiment according to the display apparatus of the invention, at the time of its operation, the stereoscopic display can be performed as well as in the display apparatus according to the first embodiment.

In the display apparatus according to the second embodiment, specifically, if the intensity or the chromaticity has the predetermined relationship in adjacent two devices of the plurality of display devices, the same effects as those in the display apparatus according to the above described first embodiment can be obtained. That is, in the adjacent two devices of the plurality of display devices, by performing adjustment so that the intensity of the light emitted by the respective display devices may fall within the first predetermined range and the chromaticity of the light may fall within the second predetermined range, the variations in intensity or chromaticity can be suppressed in the display apparatus as a whole.

Therefore, as well as in the display apparatus according to the first embodiment, the observer can visually see, for example, the suitable images for stereoscopic display in a suitable state (i.e., with no variation in intensity or chromaticity produced) as the plurality of display devices essentially should display. That is, the stereoscopic image will be visually seen more suitably.

As a result, according to the display apparatus of the second embodiment, the intensity and chromaticity of the light emitted by the plurality of display devices are adjusted within the suitable range, and consequently, the observer can visually see the stereoscopic image suitably.

In an aspect of the first or second embodiment according to the display apparatus of the invention, assuming that the maximum intensity is C1 and the minimum intensity is C2, the intensity difference is expressed by (C1 - C2)/(C1 + C2), and the first predetermined range is 15 percents.

According to this aspect, the images for stereoscopic display can be displayed more suitably by limiting the range of variations in intensity of the light (i.e., image) that the observer visually sees.

The observer sometimes recognizes the difference (i.e., variations) in intensity of the images displayed on the respective display devices if the image signals on the images with the same intensity and the same color are supplied to the respective plurality of the display devices, for example, in the display apparatus that satisfies the condition. However, by displaying, for example, the images for stereoscopic display on such display apparatus, the observer can visually see the stereoscopic image suitably.

That is, in the display apparatus that satisfies the condition, the observer can visually see the stereoscopic image suitably almost or completely regardless of the existence of the variation in intensity.

As described above, the aspect of the display apparatus in which the first predetermined range is 15 percents may be constructed so that the first predetermined range may be 7.5 percents.

By such construction, for example, when image signals on images having the same intensity and the same color are supplied to the plurality of display devices, respectively, the observer never recognizes the intensity difference of the images displayed on the respective display devices. Accordingly, by displaying images for stereoscopic display on such display devices, the observer can visually see the image with stereoscopic effect more suitably.

Therefore, there is a large advantage, in the display apparatus of intensity modulation type, for example, the suitably intensity modulated image can be visually seen by the observer suitably while keeping the condition of the modulation.

In another aspect of the first or the second embodiment according to the display apparatus of the invention, the chromaticity coordinates are chromaticity coordinates indicated by the XYZ color system, and the second predetermined range is a range in which the difference between x coordinates and the difference between y coordinates of the chromaticity coordinates are equal to or less than 0.06, respectively.

According to this aspect, the images for stereoscopic display can be displayed more suitably by limiting the range of variations in intensity of the light (i.e., image) that the observer visually sees.

The observer sometimes recognizes the difference (i.e., variations) of chromaticity of the images displayed on the respective display devices if the image signals on the images with the same intensity and the same color are supplied to the plurality of the respective display devices, for example, in the display apparatus that satisfies the condition. However, by displaying, for example, the images for stereoscopic display on such display apparatus, the observer can visually see the stereoscopic image suitably.

That is, in the display apparatus that satisfies the condition, the observer can visually see the stereoscopic image suitably almost or completely regardless of the existence of the variation in chromaticity.

As described above, the aspect of the display apparatus in which the second predetermined range is 0.06 may be constructed so that the second predetermined range may be a range in which the difference between x coordinates and the difference between y coordinates of the chromaticity coordinates are equal to or less than 0.03, respectively.

By such construction, for example, when image signals on images having the same intensity and the same color are supplied to the plurality of display devices, respectively, the observer never recognizes the intensity difference of the images displayed on the respective display devices. Accordingly, by displaying images for stereoscopic display on such display devices, the observer can visually see the image with stereoscopic effect more suitably.

In another aspect of the first or the second embodiment according to the display apparatus of the invention, the plurality of display devices can perform display in R, G, and B colors, and at least one of the intensity adjustment device and the chromaticity adjustment device performs adjustment on the light with respect to the R, G, and B colors.

According to this aspect, the image constituted by the light within the above described range of intensity or chromaticity can be visually seen with respect to the light in R, G and B colors, i.e. , red light (R), blue light (B), and green light (G). Accordingly, in the display apparatus of intensity modulation type, for example, in the image on the color display, the stereoscopic image can be visually seen more suitably.

In addition, it is preferred that, even if the strength of light (i.e., amount of light or luminous intensity) is changed, conditions on the above described range of intensity or chromaticity are satisfied with respect to red light (R), blue light (B), and green light (G).

Incidentally, the adjustment of intensity or chromaticity can be similarly performed on the predetermined light formed by mixing at least two of the respective R, G, and B colors.

In another aspect of the first or the second embodiment according to the display apparatus of the invention, at least one of the intensity adjustment device and the chromaticity adjustment device performs adjustment on white light emitted by the one display device.

According to this aspect, the adjustment can be also performed on the white light so as to satisfy the conditions on the above described range of intensity or chromaticity.

In addition, it is preferred that, even if the strength of white light is changed, the condition on the above described range of intensity or chromaticity is satisfied.

In another aspect of the first or the second embodiment according to the display apparatus of the invention, the intensity adjustment device further coordinates gamma characteristics of the plurality of display devices. According to this aspect, by coordinating the gamma characteristics unique to the respective display devices, coordination of the amount of change or the tendency of change of the intensity level of the images to be displayed and output can be performed on the intensity level of the image signals that are supplied to the plurality of display devices, respectively. Note that "gamma characteristics" according to the invention are characteristics that the intensity level of the images displayed and output by the display apparatus are nonlinear or not linear to the intensity level of the image signals essentially supplied to the display apparatus.

Therefore, by coordinating the gamma characteristics, with respect to the image signals supplied to the respective display devices, for example, it becomes unnecessary for the intensity adjustment device, for example, to adjust the intensity by considering the variations in gamma characteristics of the respective display devices. That is, the apparatus has a large advantage that the load of processing required for the intensity adjustment can be reduced.

Further, when the image is displayed by mixing the respective colors of R, G, and B, on the respective plurality of display devices disposed in front and rear relation to one another, the difference of color (i.e., color variations) due to the difference of the mixing ratio of R, G, and B can be prevented from occurring on the display devices in front and rear relation to one another. Specifically, the apparatus has a large advantage that the color variations can be prevented when the respective colors of R, G, and B are mixed with middle intensity.

Therefore, by coordinating the gamma characteristics, the respective images displayed on the plurality of display devices can be visually seen as images with further less variations in intensity or chromaticity.

In another aspect of the first or the second embodiment according to the display apparatus of the invention, at least one of the intensity adjustment device and the chromaticity adjustment device performs adjustment on the light emitted by respective screen piece units as units into which the one display device is divided within its screen.

According to this aspect, even if the intensity or chromaticity is suitably adjusted with respect to the screen piece units, the same effect as that in the display apparatus according to the embodiment can be obtained. That is, the stereoscopic image can be visually seen suitably.

For example, the intensity adjustment device or the chromaticity adjustment adjusts the light emitted by the respective screen piece units so as to satisfy the above described condition between one screen piece unit on one display device and one screen piece unit on another display device disposed at the front or the rear of the one display device and corresponding to the screen piece. Thereby, the display apparatus that satisfies the above described condition of intensity and chromaticity in a plurality of points on the screen can be realized. Thus, the observer can visually see the stereoscopic image more suitably by visually seeing the image with further less variations in intensity or chromaticity.

Incidentally, in this case, another screen piece unit on another display device that does not correspond to the one piece unit on the one display device may satisfy the above described condition, or not. In either case, when the one piece unit on the one display device and one screen piece unit on another display device satisfy the above described condition, the observer can visually see the image with no variation in intensity or chromaticity.

As described above, the aspect in which the light emitted by the respective screen piece units is adjusted may be constructed so that the screen piece unit may be a pixel block or a pixel line constituted by one pixel or a group of a plurality of pixels in the one display device.

By such construction, the images for stereoscopic display with suitably intensity or chromaticity adjusted by the pixel unit or pixel block or pixel line unit can be displayed. For example, the pixel blocks formed by dividing the entire screen into a matrix form of four-, six-, eight-, nine-part split, etc., the pixel lines formed by dividing the entire screen longitudinally or laterally into a stripe form of two-, three-, four-, five-part split, etc. are conceivable. Accordingly, the observer can visually see the images of stereoscopic display more suitably with adjusted intensity or chromaticity.

Specifically, when variations within the screen exist in display characteristics in the one display device, if parts having display characteristics relatively and largely different with respect to the pixel blocks or pixel lines are superposed, the adverse effect on the stereoscopic display by the variations within the screen in display characteristics are increased and it becomes difficult to perform stereoscopic display suitably as a whole. Alternatively, when, although the condition of intensity or chromaticity is satisfied in one pixel, pixel block, or pixel line, the condition of intensity or chromaticity is not satisfied in another pixel, pixel block, or pixel line, it becomes difficult to perform suitable stereoscopic display as a whole.

Concerning this, by disposing the plurality of display devices by superposing the parts having display characteristics relatively and slightly different with respect to the pixel blocks or pixel lines, or coordinating the tendency of the variations in display characteristics (that is, adjusting intensity or chromaticity so as to coordinate the tendency of variations), for example, the adverse effects on the stereoscopic display by the variations within the screen in display characteristics are reduced in the respective pixel blocks and the respective pixel lines, thereby, also as a whole, the suitably stereoscopic display can be easily performed. According to the aspect, the construction in which the adverse effects on the stereoscopic display by the variations within the screen in display characteristics are reduced in the respective pixel blocks and the respective pixel lines can be adopted. Thereby, the margin with respect to the variations in display characteristics becomes broader, and the rate of apparatuses that can be treated as good products in relation to the variations in display characteristics can be increased, and that leads to improvements in manufacturing yield and reduction of manufacturing cost.

In another aspect of the first or the second embodiment according to the display apparatus of the invention, at least ones of gradients of intensity change and gradients of chromaticity within the respective screens of the plurality of display devices are equal to each other.

For example, when the gradients of intensity and gradients of chromaticity in the respective plurality of display devices are not equal, assuming that the plurality of images having intensity generally and suitably adjusted are displayed for a single display device, the deviation occurs at the time of light emission from the respective display devices. For example, assuming that each display device has intensity characteristics and chromaticity characteristics as a single body, if the two screens having opposite tendencies in the vicinity of the periphery of the screen, the adverse effect on the stereoscopic display in the vicinity of the periphery of the screen by the difference between the tendencies of the intensity characteristics and chromaticity characteristics is increased.

Thus, according to this aspect, by using the display devices having gradients of intensity or gradients of chromaticity equal to each other, the above described inconvenience can be resolved. In this case, it is preferred that the apparatus is constructed so that the gradients of intensity of the respective plurality of display devices may be equal to each other. Alternatively, it is preferred that the apparatus is constructed so that the gradients of chromaticity of the respective plurality of display devices may be equal to each other. On the other hand, if the gradients of intensity or the gradients of chromaticity equal to each other at least in two adjacent display devices, the similar effect can be obtained. In either case, each display device has intensity characteristics or chromaticity characteristics within the allowable range as a single body, and two screens having tendencies equal to each other are superposed, thereby, suitable stereoscopic display over the entire screen can be performed.

Note that "equal to each other" according to the invention includes equation in a literal sense, and the display devices capable of enabling stereoscopic display by superposing and displaying the images for stereoscopic display on the line of sight of the observer suitably on the respective display devices.

In another aspect of the first or the second embodiment according to the display apparatus of the invention, the intensity adjustment device adjusts the intensity of the light so that intensity irregularities of the one display device and intensity irregularities of another display device of the plurality of display devices may have the same tendency to each other.

According to this aspect, the suitable light with adjusted intensity can be emitted without being affected by intensity irregularities unique to the display devices, which the plurality of display devices have. That is, the plurality of images with suitably adjusted intensity can be displayed.

For example, when one display device of the plurality of display devices has unique intensity irregularities, it is preferred that the intensity of the light emitted by another display device is adjusted so that the intensity irregularities of another display device of the plurality of display devices may have the same tendency as the one display device. Alternatively, the intensity of the light emitted by one display device is adjusted so that the intensity irregularities of another display device of the plurality of display devices may have the same tendency as the one display device. On the other hand, the intensity of the light emitted by one display device and another display device may be adjusted, respectively, so that the intensity irregularities of one display device and another display device may be eliminated (that is, be uniform). In either case, each display device has intensity irregularities or chromaticity irregularities within the allowable range as a single body, and two screens having tendencies of intensity irregularities equal to each other are superposed, thereby, suitable stereoscopic display over the entire screen can be performed.

In addition, there are some cases where the above described intensity condition is difficult to or can not be satisfied depending on the adjustment with the above described intensity adjustment device. In such case, by using display devices having the same tendency or similar tendencies, the above described intensity condition can be satisfied.

Further, the above described intensity condition can be satisfied by the light emitted from a certain point on the screen, however, when the light emitted by the respective screen piece units is adjusted, the case where the intensity condition is not satisfied in some screen piece units is conceivable. In this case, the apparatus has an advantage that the display apparatus that satisfies the intensity condition can be also realized relatively easily with respect to screen piece units by coordinating the tendency of the intensity irregularities.

As a result, according to this aspect, the margin of the variations in display characteristics becomes broader, and the rate of apparatuses that can be treated as good products in relation to the variations in display characteristics can be increased, and that leads to improvements in manufacturing yield and reduction of manufacturing cost.

In another aspect of the first or the second embodiment according to the display apparatus of the invention, the chromaticity adjustment device adjusts the chromaticity of the light so that color irregularities of the one display device and color irregularities of another display device of the plurality of display devices may have the same tendency to each other.

According to this aspect, the chromaticity irregularities can be coordinated in the plurality of display devices by chromaticity irregularities unique to the display devices, which the plurality of display devices have. That is, the observer can visually see the image with suitably adjusted chromaticity.

For example, when one display device of the plurality of display devices has unique chromaticity irregularities, it is preferred that the chromaticity of the light emitted by another display device is adjusted so that the chromaticity irregularities of another display device of the plurality of display devices may have the same tendency as the one display device. Alternatively, the chromaticity of the light emitted by one display device is adjusted so that the chromaticity irregularities of another display device of the plurality of display devices may have the same tendency as the one display device. On the other hand, the chromaticity of the light emitted by one display device and another display device may be adjusted, respectively, so that the chromaticity irregularities of one display device and another display device may be eliminated (that is, be uniform). In either case, each display device has chromaticity irregularities within the allowable range as a single body, and two screens having tendencies of the chromaticity irregularities equal to each other are superposed, thereby, suitable stereoscopic display over the entire screen can be performed.

In addition, there are some cases where the above described chromaticity condition is difficult to or can not be satisfied depending on the adjustment with the above described chromaticity adjustment device. In such case, by using display devices having the same tendency or similar tendencies, the above described chromaticity condition can be satisfied.

Further, the above described chromaticity condition can be satisfied by the light emitted from a certain point on the screen, however, when the light emitted by the respective screen piece units is adjusted, the case where the chromaticity condition is not satisfied in some screen piece units is conceivable. In this case, the apparatus has an advantage that the display apparatus that satisfies the chromaticity condition can be also realized relatively easily with respect to screen piece units by coordinating the tendency of the chromaticity irregularities.

As a result, according to this aspect, the margin of the variations in display characteristics becomes broader, and the rate of apparatuses that can be treated as good products in relation to variations in display characteristics can be increased, and that leads to improvements in manufacturing yield and reduction of manufacturing cost.

In another aspect of the first or the second embodiment according to the display apparatus of the invention, at least one of the intensity adjustment device and the chromaticity adjustment device performs adjustment by rewriting image information on at least one of intensity and chromaticity that the one display device has.

According to this aspect, by providing processing to the image signals supplied to the plurality of display devices, intensity or chromaticity can be adjusted relatively easily.

In another aspect of the first or the second embodiment according to the display apparatus of the invention, an input device that can input an instruction for adjusting at least one of intensity and chromaticity of the light is further provided, and at least one of the intensity adjustment device and the chromaticity adjustment device performs adjustment according to the instruction.

According to this aspect, the instruction for allowing the intensity adjustment device or the chromaticity adjustment device to perform suitable adjustment can be input. That is, according to the instruction input by the input device, the intensity adjustment device can adjust intensity of the light emitted by at least one display device of the plurality of display devices. Alternatively, according to the instruction input by the input device, the chromaticity adjustment device can adjust chromaticity of the light emitted by at least one display device of the plurality of display devices.

Therefore, by sending the instruction with the input device by the observer, for example, the intensity or chromaticity adjustment in response to the visual characteristics of the observer can be performed.

Incidentally, the input device includes, for example, various input devices such as a pointing device such as a mouse, a controller, a cross key, buttons, and a voice input device. Further, the input may be performed by a touch panel disposed on the front of the display apparatus. Alternatively, the apparatus may have a construction in which an instruction is input automatically by a microcomputer etc.

In another aspect of the first or the second embodiment according to the display apparatus of the invention, at least display devices other than a display device disposed most rearward seen from the observer, of the plurality of display devices are constituted by a translucent display device.

According to this aspect, the image displayed on the display device disposed at the rear as seen from the side of the observer can be visually seen through the display device disposed at the front as seen from the side of the observer, and the display device can be disposed directly on the line of sight of the observer.

In the aspect of the display device including the translucent display device as described above, the translucent display device may be a liquid crystal display device or an electroluminescence display device.

By such construction, the stereoscopic image can be displayed by using the translucent display device in the form of a panel such as a liquid crystal display device or an electroluminescence display device.

In another aspect of the first or the second embodiment according to the display apparatus of the invention, the plurality of display devices include a display device constituted by a half mirror.

According to this aspect, the display device is not disposed directly on the line of sight of the observer, and the image is combined via the half mirror. Therefore, a device having no light transparency can be used as the display device, and a cathode ray tube device, a plasma display device, etc., for example, can be utilized.

In an aspect of a first embodiment according to the display method of the invention, the display method relating a display apparatus including a plurality of display devices disposed on a line of sight of an observer in front and rear relation to one another for superposing and displaying a plurality of images on an object to be displayed on the line of sight, and the method includes: a display process of displaying the plurality of images on the plurality of display devices; an intensity adjustment process of adjusting intensity of light emitted by at least one display device of the plurality of display devices so that the intensity difference between the light having maximum intensity in an observation position of the observer and the light having minimum intensity in the observation position of light respectively emitted by the plurality of devices may fall within a first predetermined range; and a chromaticity adjustment process of adjusting chromaticity of light emitted by the one display device so that chromaticity coordinates in the observation position of the light emitted by the respective arbitrarily selected two display devices of the plurality of display devices of the light respectively emitted by the plurality of display devices may distribute within a second predetermined range.

According to the first embodiment of the display method of the invention, as well as the above described first embodiment of the display device of the invention, the observer is allowed to visually see the plurality of images having no variation in intensity and chromaticity on the line of sight by superposing them. That is, by displaying the images for stereoscopic display in the display process, the observer can visually see, for example, the suitable images for stereoscopic display in a suitable state (i.e., with no variation in intensity or chromaticity produced) as the plurality of display devices essentially should display. That is, the stereoscopic image will be visually seen more suitably.

Incidentally, the first embodiment of the display method of the invention can also adopt various aspects corresponding to the various aspects in the above described first embodiment of the display apparatus of the invention.

In an aspect of a second embodiment according to the display method of the invention, the display method relating a display apparatus including a plurality of display devices disposed on a line of sight of an observer in front and rear relation to one another for superposing and displaying a plurality of images on an object to be displayed on the line of sight, the method includes: a display process of displaying the plurality of images on the plurality of display devices; an intensity adjustment process of adjusting intensity of light emitted by at least one display device of two adjacent display devices of the plurality of display devices so that the intensity difference between the light having maximum intensity in an observation position of the observer and the light having minimum intensity in the observation position of light respectively emitted by the adjacent two devices may fall within a first predetermined range; and a chromaticity adjustment process of adjusting chromaticity of light emitted by the one display device so that chromaticity coordinates in the observation position of the light respectively emitted by the adjacent two display devices may distribute within a second predetermined range.

According to the above described second embodiment of the display method of the invention, as well as the second embodiment of the display device of the invention, the observer is allowed to visually see the plurality of images having no variation in intensity and chromaticity on the line of sight by superposing them. That is, by displaying the images for stereoscopic display in the display process, the observer can visually see, for example, the suitable images for stereoscopic display in a suitable state (i.e., with no variation in intensity or chromaticity produced) as the plurality of display devices should display essentially. That is, the stereoscopic image will be visually seen more suitably.

Incidentally, the second embodiment of the display method of the invention can adopt various aspects corresponding to the various aspects in the above described first embodiment of the display apparatus of the invention.

As described above, according to the first or the second embodiment of the display apparatus of the invention, the apparatus includes the plurality of display devices, the intensity adjustment device, and the chromaticity adjustment device. In addition, according to the first or the second embodiment of the display method of the invention, the method includes the display process, the intensity adjustment process, and the chromaticity adjustment process. Thus, the intensity and the chromaticity of the light emitted by the plurality of display devices are adjusted within the suitable range, and, as a result, the observer can visually see the stereoscopic image suitably. Further, according to the embodiments of the invention, the same effect can be obtained regardless of moving images or still images, that is, the observer can visually see the stereoscopic image suitably.

Such operation and another benefit of the invention will be made further clearer from an example described as below.

### EXAMPLE

Hereinafter, an example according to the display apparatus of the invention will be described by referring to the drawings.

### (Basic construction of Display Apparatus)

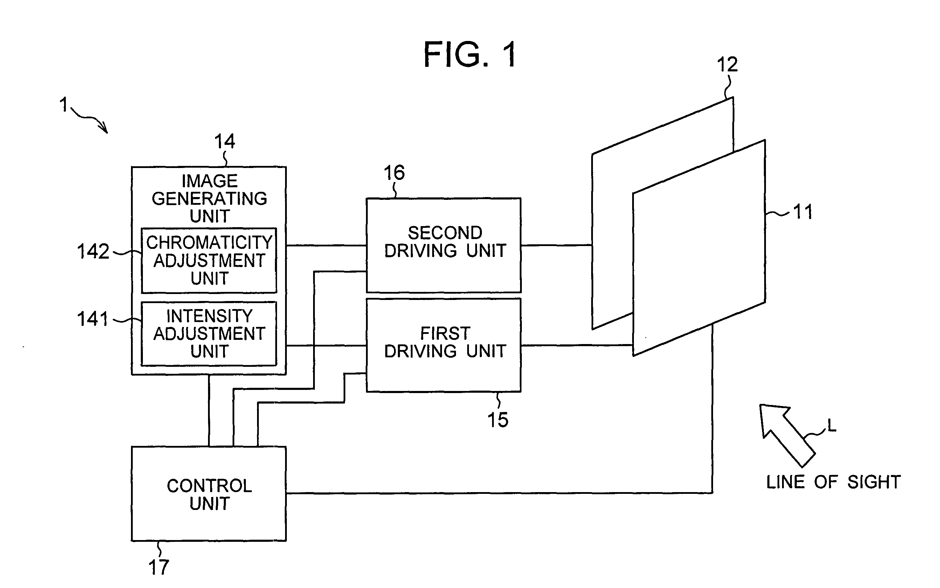

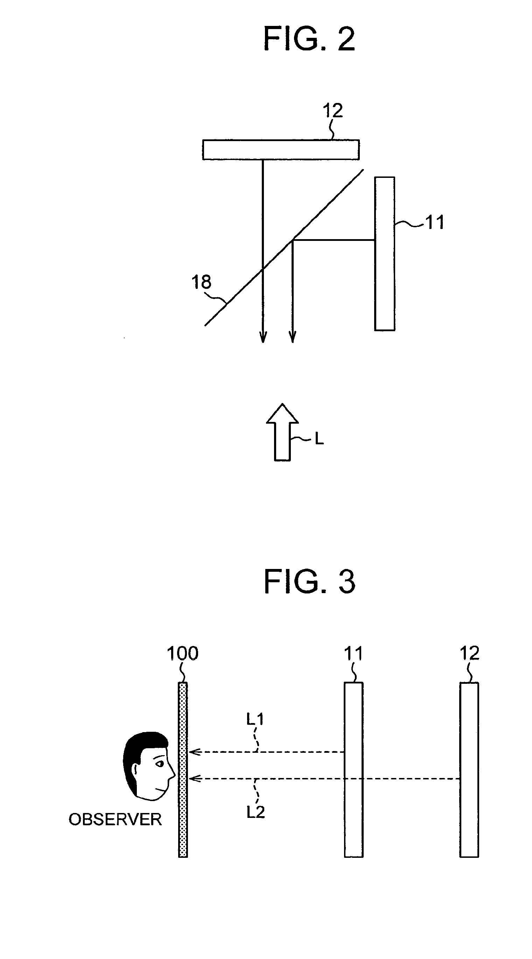

First, referring to FIGS. 1 and 2, the principal of operation and the basic construction of the display apparatus according to the first embodiment of the invention will be described. Here, FIG. 1 is a block diagram showing a construction of the example according to the display apparatus of the invention, and FIG. 2 is a schematic sectional view of an optical system showing another construction of an image display unit according to the example.

As shown in FIG. 1, the display apparatus 1 is constructed by including a front screen 11, a rear screen 12 disposed at the rear of the front screen 11, an image generating unit 14 for generating an image to be displayed on the front screen 11 and the rear screen 12, a first driving unit 15 for displaying an image signal from the image generating unit 14 on the front screen 11, a second driving unit 16 for displaying an image signal from the image generating unit 14 on the rear screen 12, and a control unit 17 for performing overall control on the display apparatus 1.

The front screen 11 and the rear screen 12 form the image display unit of the display apparatus 1 and are disposed in front and rear relation to one another relative to the line of sight L from an observer with a predetermined distance between them. The front screen 11 is disposed forward and the rear screen 12 is displaced rearward. The front screen 11 employs a light transmission display device such as a liquid display device and a electroluminescence display device so that the image on the rear screen 12 at the rear may be transmitted and the observer may visually see the image. On the other hand, the rear screen 12 disposed rearward may be a liquid display device or an electroluminescence display device, and may be a cathode ray tube display device or a plasma display device because it is unnecessary that the rear screen 12 has light transmittance.

Displaying images on these respective front screen 11 and rear screen 12 enables the observer to recognize a stereoscopic image though in a discrete way. Further, increasing or decreasing its intensity enables the stereoscopic image to be displayed as if there were an image between the front screen 11 and the rear screen 12. That is, the stereoscopic display by the intensity modulation system can be performed.

Note that, as the front screen 11, the construction using a cathode ray tube display device or a plasma display device having no light transmittance may be adopted, other than using a liquid display device or an electroluminescence display device. That is, as shown in FIG. 2, the display apparatus having no transmittance can be introduced into the image display unit by disposing the front screen 11 so as not to block the line of sight L relative to the rear screen 12, providing a half mirror 18 on the line of sight of the observer, and determining the angle of this half mirror 18 so that the image displayed on the front screen 11 may be superposed on the image displayed on the rear screen 12.

Referring to FIG. 1 again, the image generating unit 14 generates images displayed on the front screen 11 and the rear screen 12 and stores them. In addition, the unit is arranged so that externally input images such as images created by a personal computer etc. may be recorded in a predetermined recording area, and read out according to need. Each image as a unit is controlled separately and processing for individual display can be performed. As a matter of course, not only whether an image is displayed on the front screen 11 or the rear screen 12 the position, size, brightness (i.e., intensity), and hue (i.e., chromaticity) of display, the display form, image modification, etc., for example, can be independently controlled. Alternatively, these may be controlled by the instruction of a control unit 17.

Specifically, in the embodiment, the image generating unit 14 is constructed by including an intensity adjustment unit 141 and a chromaticity adjustment unit 142.

The intensity adjustment unit 141 is arranged so that the signal on the image intensity (i.e., brightness), specifically, of image signals for driving the front screen 11 or the rear screen 12 to display images can be rewritten. The intensity of light emitted at least one of the front screen 11 and the rear screen 12 is adjusted by rewriting such signal. There are methods for intensity adjustment such as a method according to a table for intensity adjustment that is created in advance, for example, and a method for obtaining the adjustment by computation from the input signal level with a predetermined function. Alternatively, in the case of an example of the display apparatus including an input unit such as a remote control device, the adjustment may be performed based on the instruction by the input unit. Incidentally, this adjustment may be performed by the instruction of the control unit 17.

The chromaticity adjustment unit 142 is arranged so that the signal on the image chromaticity (i.e., hue or display color), specifically, of image signals for driving the front screen 11 or the rear screen 12 to display images can be rewritten. The chromaticity of light emitted at least one of the front screen 11 and the rear screen 12 is adjusted by rewriting such signal. There are methods for chromaticity adjustment such as a method according to a table for chromaticity adjustment that is created in advance, for example, and a method for obtaining the adjustment by computation from the input signal level with a predetermined function. Alternatively, in the case of an example of the display apparatus including an input unit such as a remote control device, the adjustment may be performed based on the instruction by the input unit. Incidentally, this adjustment may be performed by the instruction of the control unit 17.

Note that, the respective intensity adjustment unit 141 and chromaticity adjustment unit 142 may be provided commonly on the front screen 11 and the rear screen 12. Alternatively, they may be provided on the front screen 11 and the rear screen 12, respectively.

The first driving unit 15 and the second driving unit 16 are for driving the front screen 11 and the rear screen 12 to display images, respectively, and they drive the screens to display images based on the image signal for the front screen 11 or the rear screen 12 formed in the image generating unit 14. They may have a function of performing decorative and effective driving such as display timing, blinking, etc. according to the control of the control unit 17.

The control unit 17 performs overall control on the display apparatus 1. Regarding display of a stereoscopic image, the unit allows the image generating unit 14 to generate image signals to be displayed on the front screen 11 and the screen 12 by setting display forms such as intensity and the size thereof, respectively. In addition, the unit controls the operation of the intensity adjustment unit 141 and chromaticity adjustment unit 142. Further, the unit controls the operation of the first driving unit 15 and the second driving unit 16.

### (Principle of Operation of Display Apparatus)

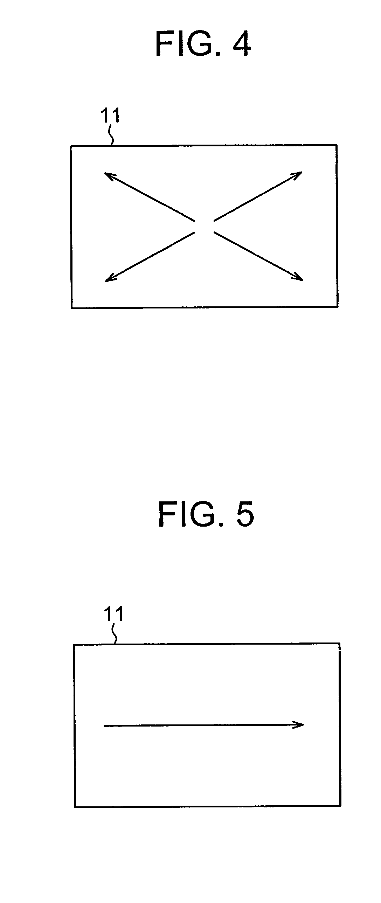

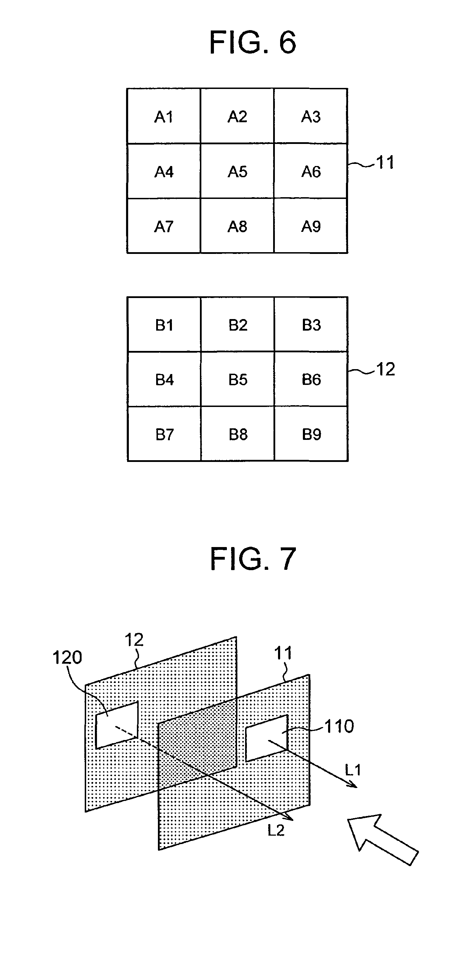

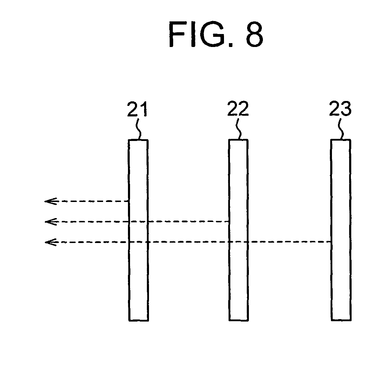

Subsequently, referring to FIGS. 3 to 8, the principle of operation of the display apparatus 1 will be described. Here, FIG. 3 is a diagram schematically showing the principle of operation of the example according to the display apparatus of the invention, FIG. 4 is a diagram schematically showing the state in which the front screen 11 has intensity irregularities, FIG. 5 is a diagram schematically showing the state in which the front screen 11 has chromaticity irregularities, FIG. 6 is a diagram showing an example in which the front screen 11 and the rear screen 12 are divided into a plurality of screen areas, FIG. 7 is a schematic sectional view schematic showing a specific example of intensity or chromaticity adjustment, and FIG. 8 is a schematic sectional view schematically showing a specific example of a display apparatus having three screens.

As shown in FIG. 3, the observer visually sees the light respectively emitted by the front screen 11 and the rear screen 12. The light respectively emitted by the front screen 11 and the rear screen 12 is emitted with suitable intensity and chromaticity so as to satisfy the conditions of intensity and chromaticity, which will be described later, by the intensity adjustment unit 141 and the chromaticity adjustment unit 142. The observer can visually see the stereoscopic image by displaying the images with suitably adjusted intensity and chromaticity (that is, images with no intensity and chromaticity variation) on the front screen 11 and the rear screen 12, respectively.

More specifically, for example, the light L2 emitted by the rear screen 12 is transmitted through the front screen 11 and visually seen by the observer. The light L2 is attenuated by being transmitted through the front screen 11. That is, for example, the intensity of the light L2 is reduced and the light with reduced intensity is to be visually seen by the observer. Therefore, in order to allow the observer to visually see the light with intensity that the rear screen 12 emits essentially, the light emitted by the rear screen 12 is raised in advance, for example. That is, in response to the image signal supplied to the rear screen 12, the intensity adjustment unit 141 rewrites the signal indicating the intensity of the image signals. The intensity adjustment unit 141 drives the rear screen 12 to display an image by the rewritten and input image signal. Thereby, the rear screen 12 can eliminate the influence of the attenuation of the light L2 generated by being transmitted through the front screen 11 by emitting the light L2 having high intensity in advance. Therefore, the observer can visually see such image in a state of essential intensity of the image by displaying the image formed from such light L2 on the rear screen 12.

Thus, an image that allows the observer to visually see the stereoscopic image is displayed also on the front screen by superposing and displaying another image on the image, thereby the observer can visually see the stereoscopic image suitably by the images respectively displayed on the front screen 11 and the rear screen 12.

Further, the chromaticity of the front screen 11 and the rear screen 12 can be similarly adjusted. For example, when the same image is displayed, if the image on the rear screen 12 only is visually seen by the observer with emphasis of "red" (that is, if variations occur in the chromaticity of the images), for example, only the image displayed on the rear screen 12 is adjusted so as to weaken the emission of read light by the chromaticity adjustment unit 142. Thereby, the observer can visually see the images respectively displayed on the front screen 11 and the rear screen 12 as the same image. That is, by displaying images for stereoscopic display on the front screen 11 and the rear screen 12in such state, the observer can visually see it as the stereoscopic image.

Note that such adjustment of intensity and chromaticity will be performed according to the conditions as below.

### (Conditions of Intensity and Chromaticity Adjustment)

It is assumed that the intensity of the light L1 emitted by the front screen 11 in the position of the observer is C1, and the intensity of the light L2 emitted by the rear screen 12 corresponding to the light L2 in the position of the observer is C2 (Note that, in this case, images with the same intensity and the same color is assumed to be displayed on the front screen 11 and the rear screen 12). That is, in FIG. 3, the intensity in the observation position 100 of the observer is shown.

In this case, if |C1 - C2|/(C1 + C2) is equal to or less than 0.15, the observer can visually see the stereoscopic image. Incidentally, in the display apparatus 1 that satisfy the condition of |C1 - C2|/(C1 + C2) = 0.15, if the same image is displayed on the front screen 11 and the rear screen 12, respectively, the observer recognizes the difference (i.e., variations) in intensity between the images respectively displayed on the screens. However, when the image for stereoscopic display is displayed on such display apparatus 1, the stereoscopic image can be visually seen.

Preferably, if |C1 - C2|/(C1 + C2) is equal to or less than 0.075, the observer can visually see the stereoscopic image more suitably. Incidentally, in the display apparatus 1 that satisfy the condition of |C1 - C2|/(C1 + C2) = 0.075, if the same image is displayed on the front screen 11 and the rear screen 12, respectively, the observer is in the state in which the observer hardly or never recognizes even the difference of intensity between the images respectively displayed on the screens. That is, when the image for stereoscopic display is displayed on the display apparatus 1 in such state, the image can be visually seen more suitably as the stereoscopic image.

In addition, it is assumed that the chromaticity coordinates of the light L1 emitted by the front screen 11 in the XYZ color system are P1, and the chromaticity coordinate of the light L2 emitted by the rear screen 12 corresponding to the light L1 in the XYZ color system are P2 (Note that, in this case, the image with the same intensity and the same color is assumed to be displayed on the front screen 11 and the rear screen 12). That is, in FIG. 3, the chromaticity of the observation position 100 of the observer is shown.

In this case, if the difference between the x coordinate of P1 and the x coordinate of P2 is equal to or less than 0.06 and the difference between the y coordinate of P1 and the y coordinate of P2 is equal to or less than 0.06, the observer can visually see the stereoscopic image. Incidentally, in such display apparatus 1, if the same image is displayed on the front screen 11 and the rear screen 12, respectively, the observer recognizes the difference of color (i.e., variations of chromaticity) between the images respectively displayed on the screens. However, when the images for stereoscopic display are displayed on such display apparatus 1, the stereoscopic image can be visually seen.

Preferably, if the difference between the x coordinate of P1 and the x coordinate of P2 is equal to or less than 0.03 and the difference between the y coordinate of P1 and the y coordinate of P2 is equal to or less than 0.03, the observer can visually see the stereoscopic image more suitably. Incidentally, in such display apparatus 1, if the same image is displayed on the front screen 11 and the rear screen 12, respectively, the observer is in the state in which the observer hardly or never recognizes even the difference of color between the images respectively displayed on the screens. That is, when the image for stereoscopic display is displayed on the display apparatus 1 in such state, the image can be visually seen more suitably as the stereoscopic image.

Note that it is preferable that the above described conditions are satisfied in at least red light (R), blue light (B), green light (G), and white light (W). Further, it is more preferable that the above described conditions are satisfied by suitably varying the light intensity (i.e., luminous intensity or amount of light) with respect to the light of the respective colors. Alternatively, it is preferable that the above described conditions are also satisfied with respect to the predetermined light formed by mixing at least two of the respective colors of R, G, and B.

By constructing the display apparatus 1 so as to satisfy the above described conditions, the observer can visually see the stereoscopic image.

Incidentally, when the intensity adjustment unit 141 and the chromaticity adjustment unit 142 respectively adjusts intensity or chromaticity with a function or table, it is preferable that, at the time of manufacturing the display apparatus according to the example, a suitable function or table is created in consideration of conditions such as transmittance characteristics of the front screen 11 and a distance between the front screen 11 and the rear screen 12, for example. Furthermore, in the case of the display apparatus including the half mirror 18 as shown in FIG. 2, for example, it is preferable that the transmittance characteristics of the half mirror 18 or the reflection characteristics of the half mirror 18 are also considered. In this case, it is preferable that the reflection characteristics of the half mirror 18 differ depending on its reflection angle.

### (Specific Intensity and Chromaticity Adjustment of Display Apparatus)

Subsequently, more specific example of intensity and chromaticity adjustment will be described.

As shown in FIG. 4, for example, the case where the front screen 11 has intensity irregularities unique to the display device and shown by an arrow is conceivable. That is, the case where the screen has intensity irregularities that reduce from the starting point toward the end point of the arrow, for example, is conceivable. Such intensity irregularities are produced by the driving method of the front screen 11, distribution of backlight, angular characteristics of the half mirror and the dichroic mirror, etc, for example. Therefore, when the front screen 11 having such intensity irregularities is used as the image display unit of the display apparatus 1, it is preferable that the intensity adjustment unit 141 adjusts so that the rear screen 12 may have such intensity irregularities. Such adjustment is performed so as to satisfy the above described conditions of intensity. Note that each of the front screen 11 and the rear screen 12 has intensity irregularities within an allowable range as a discrete display device. Alternatively, the front screen 11 and the rear screen 12 may be adjusted by the intensity adjustment unit 141 so as to be in a state in which they have no intensity irregularities, respectively.

Incidentally, even if the adjustment by the intensity adjustment unit 141 is difficult, by using the rear screen 12 having such intensity irregularities, the display apparatus 1 that satisfies the above described condition can be realized.

Alternatively, as shown in FIG. 5, for example, the case where the front screen 11 has chromaticity irregularities unique to the display device is conceivable. That is, the case where the screen has chromaticity irregularities having redness emphasized more from the starting point toward the end point of the arrow is conceivable. When the front screen 11 having such chromaticity irregularities is used as the image display unit of the display apparatus 1, it is also preferable that the rear screen 12 is adjusted by the chromaticity adjustment unit 142 so as to have such chromaticity irregularities as well as when the front screen 11 having intensity irregularities is used. Such chromaticity adjustment is performed so as to satisfy the above described conditions of chromaticity. Note that each of the front screen 11 and the rear screen 12 has chromaticity irregularities within an allowable range as a discrete display device. Alternatively, the front screen 11 and the rear screen 12 may be adjusted by the chromaticity adjustment unit 142 so as to be in a state in which they have no chromaticity irregularities, respectively.

Incidentally, even if the adjustment by the chromaticity adjustment unit 142 is difficult, by using the rear screen 12 having such chromaticity irregularities, the display apparatus 1 that satisfies the above described condition can be realized.

Further, it is preferable that the gamma characteristics as characteristics unique to the display devices of the front screen 11 and the rear screen 12, respectively, are coordinated with each other. That is, it is preferable that the form of the gamma curve of the front screen 11 and the gamma curve of the rear screen 12 are the same or substantially the same. In this case, the forms of the gamma curves of the front screen 11 and the rear screen 12 (i.e., gamma characteristics) can be coordinated by recording forms of gamma curves in the intensity adjustment unit 141, for example.

In addition, as shown in FIG. 6, the apparatus may have a construction in which the screens of the front screen 11 and the rear screen 12 are respectively divided into nine areas, and the above described conditions may be satisfied for the respective corresponding areas. That is, the apparatus may have the construction in which the screen area A1 of the front screen 11 and the screen area B1 of the rear screen 12 corresponding to the screen area A1 satisfy the above described conditions of intensity and chromaticity. In other words, the apparatus may have the construction in which the above described conditions of intensity and chromaticity are satisfied with respect to the areas the observer visually sees by superposing them on the line of sight. In this case, for example, other screen areas B2, B3,..., B9 of the rear screen 12, which do not correspond to the screen area A1 may or may not satisfy the above described conditions of intensity and chromaticity in relation to the screen area A1. In either case, if the apparatus is constructed so that the light emitted by the screen areas of the front screen 11 and the light emitted by the screen areas of the rear screen 12 corresponding to the screen areas may satisfy the above described conditions of intensity and chromaticity, by such display apparatus 1, the observer can visually see the image having stereoscopic effect suitably.

Incidentally, when the front screen 11 and the rear screen 12 are divided, the case where, despite that the light emitted by one screen area satisfies the above described conditions of intensity and chromaticity, the light emitted by another screen area does not satisfy the conditions is conceivable. In this case, as described in FIGS. 4 and 5, it is preferable that the front screen 11 and the rear screen 12 are also adjusted so as to respectively have the same intensity irregularities or chromaticity irregularities or with a similar tendency thereof. Alternatively, it is preferable that the front screen 11 and the rear screen 12 having the same intensity irregularities or chromaticity irregularities or with a similar tendency thereof are used. Thereby, the display apparatus 1 that satisfies the conditions of intensity and chromaticity also in the respective screen areas can be realized easier.

Incidentally, when the front screen 11 and the rear screen 12 are respectively divided into screen areas, not limited to the nine-part split as shown in FIG. 6, they can be divided into a predetermined number. In addition, all of the screen areas may have the same size or at least one screen may have the different size.

In this case, it is preferable that the intensity adjustment unit 141 and the chromaticity adjustment unit 142 are constructed so as to adjust the intensity and the chromaticity for the respective screen areas. For example, the similar operation can be performed by reading out or controlling the signal indicating a predetermined screen area within the screens in addition to rewriting the signal indicating intensity or chromaticity of the image signals supplied to the front screen 11 and the rear screen 12, respectively.

Subsequently, as shown in FIG. 7, a specific adjustment example of the above described intensity or chromaticity adjustment will be described. An image 110 is displayed on the front screen 11, and an image 120 is displayed on the rear screen 12. It is assumed that the two images 110 and 120 are displayed by the image signal with the same intensity and the same chromaticity. In this case, the intensity adjustment unit 141 or the chromaticity adjustment unit 142 adjusts the light L1 or L2 so that the light L1 emitted from the image 110 and the light L2 emitted from the image 120 may satisfy the above described conditions as seen from the side of the observer. For example, the intensity or the chromaticity measured by an intensity or chromaticity measuring instrument disposed in the position of the observer is adjusted so as to satisfy the above described conditions.

In addition, when the adjustment is performed with respect to corresponding pixels (or image areas) in the front screen 11 and the rear screen 12, respectively, the light L1 and the light L2 are superposed. On this account, by alternately displaying the images to be displayed on the front screen 11 and the rear screen 12, for example, the respective light can be measured and adjusted so as to satisfy the above described conditions with respect to corresponding pixels.

Therefore, in the predetermined pixels (or image areas) on the front screen 11 and the rear screen 12, the display apparatus capable of displaying images with suitably adjusted intensity and chromaticity can be realized.

Incidentally, the display apparatus according to the example may have a construction in which the result of the above described intensity or chromaticity adjustment can be stored. For example, the apparatus may have a construction in which the result is recorded in a memory such as a RAM within the image generating unit 14. In this case, for example, at the time of manufacturing the display apparatus according to the example, the front screen 11 and the rear screen 12 may be manufactured so as to satisfy the above described conditions of intensity or chromaticity in advance, and the result may be recorded within the memory as preset information at the time of factory shipment.

In addition, the display apparatus 1 including an input unit such as a remote control device, controller, or touch panel, for example, may have a construction in which an instruction of the observer can be input, for example. In this case, the instruction input from the input unit is received by a data receiving unit, input interface, etc. provided in the control unit 17, for example, and output to the image generating unit 14. In the image generating unit 14, desired adjustment is performed according to the instructions output from the control unit 17 by the intensity adjustment unit 141 or the chromaticity adjustment unit 142. Thereby, the intensity or the chromaticity adjusted or set automatically by the intensity adjustment unit 141 or the chromaticity adjustment unit 142, for example, can be further adjusted according to the instruction of the observer, for example. Therefore, images can be displayed on the front screen 11 and the rear screen 12, respectively, with the intensity or chromaticity desired by the observer. Incidentally, the apparatus may adopt the construction in which the input result by such input unit is recorded in the above described memory, for example.

Note that, in the example, the case of two screens (i.e., the front screen 11 and the rear screen 12) is described, however, as shown in FIG. 8, even three or more screens can provide similar effects. In this case, the above described conditions of intensity are determined by assuming that the intensity of the light having the maximum intensity is C1 and the intensity of the light having the minimum intensity is C2 in the position of the observer of the light emitted by the three or more screens according to the similar expression. Further, the condition on chromaticity is the condition in which "the maximum difference between x coordinates and the maximum difference between y coordinates of arbitrarily selected two chromaticity coordinates of chromaticity coordinates emitted by the three or more screens are equal to or less than 0.06 or 0.03 as described above, respectively." If this condition is satisfied, the observer can visually see the stereoscopic image suitably by visually seeing the image with suppressed variations in intensity or chromaticity.

Alternatively, if, of three or more display devices, each display device satisfies the above described conditions between adjacent devices, the effects equal to those in the display apparatus 1 according to the example can be obtained. That is, in FIG. 8, if the intensity or chromaticity of the light emitted by the respective screens is adjusted so that a screen 21 and a screen 22 may satisfy the above described conditions and the screen 22 and a screen 23 may satisfy the above described conditions, the observer can visually see the stereoscopic image with suppressed variations in intensity or chromaticity. That is, the observer can visually see the stereoscopic image suitably.

The invention is not limited to the embodiments or the example as described above, and suitable changes can be made within the range consistent with the content or idea of the invention, which can be read from the claims and the entire specifications, and a display apparatus or a method accompanying such changes is also included in the technical idea of the invention.

## Claims

1. A display apparatus (1), **characterized in that** the display unit comprises:
a plurality of display devices (11,12) disposed on a line of sight of an observer in front and rear relation to one another for superposing and displaying a plurality of images on an object to be displayed on said line of sight;
an intensity adjustment device (141) for adjusting intensity of light emitted by at least one display device of said plurality of display devices(11.12) so that the intensity difference between the light having maximum intensity in an observation position of said observer and the light having minimum intensity in said observation position of light respectively emitted by said plurality of devices may fall within a first predetermined range; and
a chromaticity adjustment device (142) for adjusting chromaticity of light emitted by said one display device so that chromaticity coordinates in said observation position of the light emitted by the respective arbitrarily selected two display devices of said plurality of display devices(11,12) of the light respectively emitted by said plurality of display devices distribute within a second predetermined range.

2. A display apparatus (1), **characterized in that** the display unit comprises:
a plurality of display devices (11,12) disposed on a line of sight of an observer in front and rear relation to one another for superposing and displaying a plurality of images on an object to be displayed on said line of sight;
an intensity adjustment device (142) for adjusting intensity of light emitted by at least one display device of two adjacent display devices of said plurality of display devices so that the intensity difference between the light having maximum intensity in an observation position of said observer and the light having minimum intensity in said observation position of light respectively emitted by said adjacent two devices may fall within a first predetermined range; and
a chromaticity adjustment device (141) for adjusting chromaticity of light emitted by said one display device so that chromaticity coordinates in said observation position of the light respectively emitted by said adjacent two display devices may distribute within a second predetermined range.

3. A display apparatus according to Claim 1 or 2, **characterized in that** the display unit, herein assuming that said maximum intensity is C1 and said minimum intensity is C2, said intensity difference is expressed by (C1 - C2)/(C1 + C2), and said first predetermined range is 15 percents.

4. A display apparatus according to Claim 3, **characterized in that** the first predetermined range is 7.5 percents.

5. A display apparatus according to any one of Claims 1 to 4, **characterized in that** the chromaticity coordinates are chromaticity coordinates indicated by the XYZ color system, and
said second predetermined range is a range in which the difference between x coordinates and the difference between y coordinates of said chromaticity coordinates are equal to or less than 0.06, respectively.

6. A display apparatus according to Claim 5, **characterized in that** the second predetermined range is a range in which the difference between x coordinates and the difference between y coordinates of said chromaticity coordinates are equal to or less than.0.03, respectively.

7. A display apparatus according to any one of Claims 1 to 6, **characterized in that** the plurality of display devices can perform display in R, G, and B colors, and
at least one of said intensity adjustment device and said chromaticity adjustment device performs adjustment on the light with respect to the R, G, and B colors.

8. A display apparatus according to any one of Claims 1 to 7, **characterized in that** at least one of said intensity adjustment device and said chromaticity adjustment device performs adjustment on white light emitted by said one display device.

9. A display apparatus according to any one of Claims 1 to 8, **characterized in that** said intensity adjustment device further coordinates gamma characteristics of said plurality of display devices.

10. A display apparatus according to any one of Claims 1 to 9, **characterized in that** at least one of said intensity adjustment device and said chromaticity adjustment device performs adjustment on the light emitted by respective screen piece units as units into which said one display device is divided within its screen.

11. A display apparatus according to Claim 10, **characterized in that** the screen piece unit is a pixel block or a pixel line constituted by one pixel or a group of a plurality of pixels in said one display device.

12. A display apparatus according to any one of Claims 1 to 11, **characterized in that** at least ones of gradients of intensity change and gradients of chromaticity within the respective screens of said plurality of display devices are equal to each other.

13. A display apparatus according to any one of Claims 1 to 12, **characterized in that** said intensity adjustment device adjusts the intensity of said light so that intensity irregularities of said one display device and intensity irregularities of another display device of said plurality of display devices may have the same tendency to each other.

14. A display apparatus according to any one of Claims 1 to 13, **characterized in that** said chromaticity adjustment device adjusts the chromaticity of said light so that color irregularities of said one display device and color irregularities of another display device of said plurality of display devices may have the same tendency to each other.

15. A display apparatus according to any one of Claims 1 to 14, **characterized in that** at least one of said intensity adjustment device and said chromaticity adjustment device performs adjustment by rewriting image information on at least one of intensity and chromaticity that said one display device has.

16. A display apparatus according to any one of Claims 1 to 15, **characterized in that** the display unit: further comprising an input device that can input an instruction for adjusting at least one of intensity and chromaticity of said light,
wherein at least one of said intensity adjustment device and said chromaticity adjustment device performs adjustment according to said instruction.

17. A display apparatus according to any one of Claims 1 to 16, wherein at least display devices other than a display device disposed most rearward seen from said observer of said plurality of display devices are constituted by a translucent display device.

18. A display apparatus according to Claim 17, **characterized in that** said translucent display device is a liquid crystal display device or an electroluminescence display device.

19. A display apparatus according to any one of Claims 1 to 18, **characterized in that** said plurality of display devices include a display device constituted by a half mirror.

20. A display method relating a display apparatus including a plurality of display devices disposed on a line of sight of an observer in front and rear relation to one another for superposing and displaying a plurality of images on an object to be displayed on said line of sight, **characterized in that** the display method comprises:
a display process of displaying said plurality of images on said plurality of display devices;
an intensity adjustment process of adjusting intensity of light emitted by at least one display device of said plurality of display devices so that the intensity difference between the light having maximum intensity in an observation position of said observer and the light having minimum intensity in said observation position of light respectively emitted by said plurality of devices may fall within a first predetermined range; and
a chromaticity adjustment process of adjusting chromaticity of light emitted by said one display device so that chromaticity coordinates in said observation position of the light emitted by the respective arbitrarily selected two display devices of said plurality of display devices of the light respectively emitted by said plurality of display devices may distribute within a second predetermined range.

21. A display method relating a display apparatus including a plurality of display devices disposed on a line of sight of an observer in front and rear relation to one another for superposing and displaying a plurality of images on an object to be displayed on said line of sight, **characterized in that** the display method comprises:
a display process of displaying said plurality of images on said plurality of display devices;
an intensity adjustment process of adjusting intensity of light emitted by at least one display device of two adjacent display devices of said plurality of display devices so that the intensity difference between the light having maximum intensity in an observation position of said observer and the light having minimum intensity in said observation position of light respectively emitted by said adjacent two devices may fall within a first predetermined range; and
a chromaticity adjustment process of adjusting chromaticity of light emitted by said one display device so that chromaticity coordinates in said observation position of the light respectively emitted by said adjacent two display devices may distribute within a second predetermined range.
